(19) Europäisches Patentamt
European Patent Office
Office européen des brevets

(11) EP 0 534 238 B1

(12) **EUROPÄISCHE PATENTSCHRIFT**

(45) Veröffentlichungstag und Bekanntmachung des Hinweises auf die Patenterteilung:
**31.07.1996 Patentblatt 1996/31**

(51) Int Cl.$^6$: **C08L 69/00**, C08K 5/49
// (C08L69/00, 55:02, 25:04, 27:18)

(21) Anmeldenummer: **92115461.3**

(22) Anmeldetag: **10.09.1992**

(54) **Flammwidrig ausgerüstete, chlor- und bromfreie Polycarbonat-ABS-Formmassen**
Flame-retardant polycarbonate-ABS moulding compositions, free of chlorine and bromine
Compositions à mouler de polycarbonate et d'ABS, ignifuges et exemptes de chlore et de brome

(84) Benannte Vertragsstaaten:
**BE DE ES FR GB IT NL**

(30) Priorität: **24.09.1991 DE 4131710**

(43) Veröffentlichungstag der Anmeldung:
**31.03.1993 Patentblatt 1993/13**

(73) Patentinhaber: **BASF Aktiengesellschaft**
**67063 Ludwigshafen (DE)**

(72) Erfinder:
- **Niessner, Norbert, Dr.**
  **W-6701 Friedelsheim (DE)**
- **Neumann, Rainer, Dr.**
  **W-6704 Mutterstadt (DE)**
- **Ruppmich, Karl**
  **W-6700 Ludwigshafen (DE)**
- **Seitz, Friedrich, Dr.**
  **W-6701 Friedelsheim (DE)**
- **Zeltner, Doris, Dr.**
  **W-6725 Roemerberg (DE)**

(56) Entgegenhaltungen:
**EP-A- 0 436 895**

EP 0 534 238 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft eine flammwidrig ausgerüstete Formmasse aus einem Polycarbonat und einem ABS-Pfropfcopolymeren, die als flammhemmenden Zusatz eine organische Phosphorverbindung und ferner Polytetrafluorethylen enthält.

Derartige Formmassen sind beispielsweise bekannt aus den deutschen Offenlegungschriften 3 523 314, 3 523 316, 3 819 081, 3 824 356 und 3 628 904 sowie den europäischen Patentpublikationen 286 965 und 287 895.

Zur Flammschutzausrüstung werden neben organischen Phosphorsäureestern faserbildende PTFE-Polymere eingesetzt. Mischungen dieser Art haben zwar eine gute flammhemmende Wirkung, jedoch Nachteile hinsichtlich der Kerbschlagzähigkeit. Außerdem führt die zu einer Einstufung nach UL 94 notwendige Menge an organischen Phosphorverbindungen zu einer drastischen Erniedrigung der Wärmeformbeständigkeit. In der DE-OS 3 824 356 werden deshalb spezielle Phosphorsäureester vorgeschlagen, die eine erhöhte Vicat-Temperatur trotz guter flammhemmender Wirkung gewährleisten sollen. Diese speziellen Phosphate sind allerdings nicht handelsüblich und aufwendig herzustellen. Außerdem zeigen Mischungen mit diesen Phosphaten ebenfalls eine unzureichende Kerbschlagzähigkeit.

Organische Phosphate mit Vinylgruppen sind bekannt (Firmenschrift MR 260 der Daihachi Inc.) und können nach Herstellerangaben als Flammschutzmittel eingesetzt werden. Über ihre wirkung in PC/ASA- oder PC/ABS-Blends ist allerdings nichts bekannt.

Bekannt ist auch, Polycarbonat-Formmassen durch polymere Phosphate flammwidrig auszurüsten (US-PS 4 463 130, US-PS 4 481 338). Nachteilig wirkt sich hier jedoch die hohe Menge an benötigtem Phosphat aus, sowie die geringe Fließfähigkeit der Formmassen.

Es wurde nun gefunden, daß gewisse, der radikalischen Polymerisation zugängliche organische Phosphate mit polymerisierbaren Vinylgruppen in Form ihrer Copolymerisate mit u.a. Styrol den Formmassen der eingangs genannten Art einen guten Flammschutz verleihen. Eine auf diese Weise polymergebundene phosphororganische Verbindung bewirkt keine unerwünschte Reduzierung der Wärmeformbeständigkeit und keine Verringerung der Fließfähigkeit. Überraschend ist auch, daß die entsprechend ausgerüsteten Mischungen eine ausgezeichnete Kerbschlagzähigkeit aufweisen.

Die polymerisierbaren Phosphate können dabei sowohl in Form eines Pfropfkautschuks wie eines Copolymeren in die entsprechende Mischung eingebracht werden, wodurch sich zwei verschiedene Ausführungsformen der Erfindung ergeben, die nachstehend im einzelnen beschrieben werden.

Die erfindungsgemäßen Formmassen zeichnen sich durch eine besonders gute Fließfähigkeit aus.

Unmittelbarer Erfindungsgegenstand nach der ersten Ausführungsform ist eine flammwidrig ausgerüstete, chlor- und bromfreie Formmasse aus, bezogen auf die Summe der Bestandteile A bis E

A: 40 - 90 Gew.-% eines Polycarbonats A;

B: 5 - 40 Gew.-% eines Pfropfpolymerisats B aus, bezogen auf B

- B1: 40 - 80 Gew.-% einer elastomeren Pfropfgundlage B1 und
- B2: 20 - 60 Gew.-% einer Pfropfhülle B2 aus
  - B21: 40 - 98 Gew.-% Styrol, dessen kernalkylierten oder $\alpha$-alkylsubstituierten Analogen und/oder einem $C_1$-$C_8$-Alkyl(meth)acrylat oder deren Mischungen (B21)
  - B22: 1 - 50 Gew.-% (Meth)acrylnitril, $C_1$-$C_8$-Alkyl(meth)acrylat, Maleinsäureanhydrid oder deren Mischungen (B22) und
  - B23: 1 - 50 Gew.-% einer radikalisch polymerisierbaren organischen Phosphorverbindung B23 der allgemeinen Formel (I)

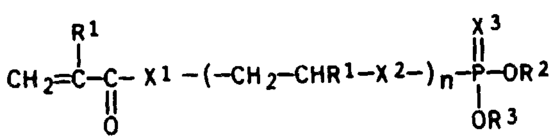

(I) ,

wobei bedeuten

$R^1$: Wasserstoff oder Methyl

$R^2$, $R^3$: unabhängig voneinander halogenfreies $C_1$-$C_8$-Alkyl oder halogenfreies ggf. halogenfrei substituiertes $C_6$-$C_{20}$-Aryl

$X^1$, $X^2$, $X^3$: O, S, $NR^4$ (wobei $R^4$ ein halogenfreies $C_1$-$C_8$-Alkyl oder H bedeutet)

n: 0 bis 10

mit der Maßgabe, daß n mindestens den Wert 1 hat, wenn $X^1$ und $X^2$ die gleiche Bedeutung haben oder gleichzeitig O und S bedeuten;

C: 5 - 40 Gew.-% eines thermoplastischen Copolymerisats C aus, bezogen auf C

C1: 50 - 95 Gew.-% Styrol, dessen kernsubstituierten oder α-alkyl-substituierten Analogen und/oder einem $C_1$-$C_8$-((meth)acrylat oder deren Mischungen ($C_1$)

C2: 50 - 5 Gew.-% (Meth)acrylnitril, Maleinsäureanhydrid oder deren Mischungen (C2)

D: bis zu 20 Gew.-% mindestens einer halogenfreien niedermolekularen Phosphorverbindung D sowie

E: bis zu 5 Gew.-% eines Tetrafluorethylen-Polymerisats (PTFE) mit einer mittleren Teilchengröpe von 50 bis 20 000 nm.

Eine bevorzugte Formmasse nach der ersten Ausführungsform enthält die Bestandteile A bis E

A: 50 - 85 Gew.-%,
B: 5 - 25 Gew.-%,
C: 5 - 40 Gew.-%,
D: 4 - 15 Gew.-%,
E: 0,01 - 2 Gew.-%.

Bevorzugt ist das Elastomere B1 ein Polybutadienkautschuk.

Ebenfalls günstige Eigenschaften haben Formmassen, in denen das Elastomere B1 aus einem vernetzten Butylacrylatkautschuk aufgebaut ist, bestehend aus (bezogen auf die Summe aus B11, B12 und B13)

B11: 70 - 99,9 Gew.-% mindestens eines Alkylacrylates mit 1 - 8 Kohlenstoffatomen im Alkylrest

B12: 0,1 - 15 Gew.-% mindestens eines polyfunktionellen, vernetzend wirkenden Monomeren

B13: 0 - 29,9 Gew.-% mindestens eines weiteren, ethylenisch ungesättigten Comonomeren.

Es ist vorteilhaft, die Formmassen dadurch herzustellen, daß das PTFE durch Aufziehen einer wäßrigen PTFE-Dispersion auf ein Granulat oder Pulver mindestens einer der Komponenten A bis D in der Kälte vorgemischt und anschließend durch Aufschmelzen unter Scherung, z.B. durch Extrudieren, Kneten o.ä. homogenisiert wird.

Der unmittelbare Erfindungsgegenstand nach der zweiten Ausführungsform ist eine flammwidrig ausgerüstete, chlor- und bromfreie Formmasse aus, bezogen auf die Summe der Bestandteile A bis E

A: 40 - 90 Gew.-% eines Polycarbonats A;

B: 5 - 40 Gew.-% mindestens eines Pfropfpolymerisats B aus, bezogen auf B

B1: 40 - 80 Gew.-% einer elastomeren Pfropfgrundlage B1 und

B2: 20 - 60 Gew.-% einer Pfropfhülle B2 aus

B21: 50 - 90 Gew.-% Styrol, dessen Analogen und/oder einem $C_1$-$C_8$-Alkyl(meth)acrylat oder deren Mischungen (B21)

B22: 50 - 5 Gew.-% (Meth)acrylnitril, einem $C_1$-$C_8$-Alkyl(meth)acrylat oder Maleinsäureanhydrid oder deren Mischungen B22)

C: 5 - 40 Gew.-% eines thermoplastischen Copolymerisats C aus, bezogen auf C,

C1: 50 - 95 Gew.-% Styrol, einem seiner Analogen, einem $C_1$-$C_8$-(meth)acrylat oder deren Mischungen (C1)

C2: 4 - 49 Gew.-% (Meth)acrylnitril, Methylmethacrylat, Maleinsäureanhydrid oder deren Mischungen (C2) und

C3: 1 - 40 Gew.-% einer radikalisch polymerisierbaren organischen Phosphorverbindung C3 der allg. Formel (I)

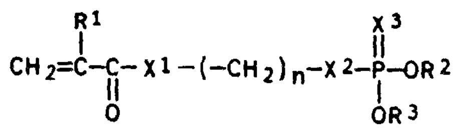

(I)

D: bis 20 Gew.-% mindestens einer halogenfreien niedermolekularen Phosphorverbindung C

E: einer wirksamen Menge von bis zu 5 Gew.-% eines Tetrafluorethylen-Polymerisats (PTFE,E) mit einer mittleren Teilchengröße von 50 bis 20 000 nm.

Eine bevorzugte Formmasse nach der zweiten Ausführungsform enthält die Bestandteile A bis E in folgenden Anteilen

A: 50 - 85 Gew.-%,
B: 5 - 25 Gew.-%,
C: 5 - 40 Gew.-%,
D: 4 - 15 Gew.-%,
E: 0,01 - 2 Gew.-%.

Bevorzugt ist das Elastomere B1 wiederum ein Polybutadienkautschuk.

Ebenfalls günstige Eigenschaften haben Formmassen, in denen das Elastomere B1 aus einem vernetzten Butylacrylatkautschuk aufgebaut ist, bestehend aus (bezogen auf die Summe aus B11 und B12

B11: 70 - 99,9 Gew.-% mindestens eines Alkylacrylates mit 1 - 8 Kohlenstoffatomen im Alkylrest

B12: 0,1 - 15 Gew.-% mindestens eines polyfunktionellen, vernetzend wirkenden Monomeren

B13: 0 - 29,9 Gew.-% mindestens eines weiteren ethylenisch ungesättigten Monomeren.

Die Herstellung der Formmasse unter Mitverwendung von PTFE gestaltet sich vorteilhaft wie oben beschrieben.

Zu den erfindungsgemäß zu verwendenden Bestandteilen ist im einzelnen das folgende zu sagen:

Polycarbonate

Erfindungsgemäß geeignete, thermoplastische aromatische Polycarbonate A sind erhältlich auf der Grundlage von Bisphenolen der Struktur

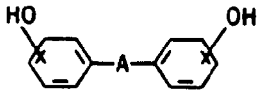

worin A eine Einfachbindung, $C_1$-$C_3$-Alkylen, $C_2$-$C_3$-Alkyliden, $C_3$-$C_6$-Cycloakyliden, -S- oder -$SO_2$- bedeutet.

Erfindungsgemäß geeignet sind Homopolycarbonate und Copolycarbonate.

Die Bisphenole sind bekannt oder nach bekannten Verfahren herstellbar.

Geeignete Bisphenole sind beispielsweise Hydrochinon, Resorcin, 4,4'-Dihydroxydiphenyl, 2,2-Bis-(4-hydroxyphenyl)-propan, ("Bisphenol A"), 2,4-Bis-(4-hydroxyphenyl)-2-methylbutan, 1,1-Bis-(4-hydroxyphenyl)-cyclohexan. Bevorzugt sind 2,2-Bis-(4-hydroxyphenyl)-propan und 1,1-Bis-(4-hydroxyphenyl)-cyclohexan.

Erfindungsgemäß gut geeignete Polycarbonate weisen eine relative Viskosität $\eta_{rel}$ von 1,10 bis 1,50, insbesondere von 1,25 bis 1,40 auf. Dies entspricht einem mittleren Molekulargewicht ($\overline{M}_w$) von 10 000 bis 200 000, vorzugsweise von 20 000 bis 80 000. Sie können in bekannter Weise verzweigt sein, und zwar vorzugsweise durch den Einbau von 0,05 bis 2,0 mol-%, bezogen auf die Summe der eingesetzten Diphenole, an Verbindungen mit drei oder mehr als drei phenolischen OH-Gruppen.

Bevorzugte Polycarbonate sind das Homopolymerisat von Bisphenol A und die Copolycarbonate von Bisphenol A.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigungen aufgebaut sind; Polymere mit untergeordneten (ppm)-Mengen an verseifbarem Chlor (resultierend beispielsweise aus der Herstellung mit Phosgen nach dem Phasengrenzflächenverfahren) sind nicht als halogenhaltig im Sinne der Erfindung anzusehen.

Die Herstellung geeigneter Polycarbonate ist ebenfalls bekannt und kann beispielsweise mit Phosgen nach dem Phasengrenzflächenverfahren oder nach dem Verfahren in homogener Phase (dem sogenannten Pyridinverfahren) erfolgen, wobei das jeweils einzustellende Molekulargewicht in bekannter Weise durch eine entsprechende Menge an Kettenabbrechern erzielt wird (bezüglich polydiorganosiloxanhaltiger Polycarbonate wird beispielsweise auf die DE-OS 33 34 782 verwiesen).

Geeignete Kettenabbrecher sind beispielsweise Phenol, p-tert.-Butylphenol aber auch langkettige Mono- oder Dialkylphenole mit insgesamt 8 bis 20 C-Atomen in den Alkylsubstituenten wie beispielsweise 4-Nonylphenol, 3,5-Di-tert.-butylphenol, 4-(1,1,3,3-Tetramethyl-butyl)-phenol, 4-tert.-Octylphenol, p-Dodecylphenol, 2-(3,5-Dimethyl-heptyl)-phenol und 4-(3,5-Dimethylheptyl)-phenol (vgl. DE-OS 28 42 005, DE-OS 35 06 472).

Pfropfcopolymerisate

Pfropfcopolymerisate B im Sinne der Erfindung sind insbesondere Emulsionspfropfpolymerisate, gepfropft mit einem Gemisch aus den Monomeren B11, B22 und ggf. B23, nämlich z.B. 1 bis 50, insbesondere 10 bis 40 Gew.-% im Sinne der ersten Ausführungsform mit, bzw. 5 bis 50, insbesondere 10 bis 40 Gew.-% nach der zweiten Ausführungsform ohne polymerisierbares Phosphat B23 an (Meth)acrylnitril, Methylmethacrylat oder Maleinsäureanhydrid und 90 bis 50 Gew.-% Styrol oder dessen Analogen auf teilchenförmige Dienkautschuke oder wenigstens partiell vernetzte Alkylacrylatkautschuke einer mittleren Teilchengröße (Gewichtsmittel) von 50 bis 1000 nm.

Bevorzugte Dienkautschuke sind Polybutadien oder Polyisopren und Butadiencopolymere mit bis zu 50 Gew.-% copolymerisierten Monomeren wie Acrylnitril, Styrol, Methylmethacrylat oder Butylacrylat. Die Pfropfpolymerisate enthalten 40 bis 80, insbesondere 50 bis 70 Gew.-% Dienkautschuk. Die Herstellung solcher Pfropfpolymerisate ist bekannt und geschieht z.B. durch radikalische Polymerisation des Monomerengemisches aus Styrol und Acrylnitril in Gegenwart des in wäßriger Emulsion vorliegenden teilchenförmigen Dienkautschuks. Geeignete Pfropfpolymerisate sind auch Pfropfpolymerisate der Monomeren B21 und ggf. B23 auf Acrylatkautschuke, die durch Polymerisation von - mindestens teilweise - Acrylsäurealkylestern mit 4 bis 10 Kohlenstoffatomen im Alkylrest, insbesondere Butylacrylat und Ethylhexylacrylat erhalten worden waren. Die als Pfropfgrundlage geeigneten Acrylatkautschuke können Comonomere wie Styrol, Butadien oder Methylmethacrylat in Mengen bis zu 30 Gew.-% einpolymerisiert enthalten und sind partiell vernetzt; die Vernetzung wird durch radikalische Emulsionspolymerisation entsprechender Monomerengemische in Gegenwart eines copolymerisierbaren, mehrfunktionellen, die Vernetzung bewirkenden Monomeren bewirkt. Geeignete Vernetzungsmonomere sind beispielsweise Divinylbenzol, Diallylmaleat, Diallylfumarat oder Diallylphthalat. Als besonders günstiges Vernetzungsmonomeres hat sich der Acrylsäureester des Tricyclodecenylalkohols erwiesen (vgl. DE-PS 12 60 135). Die Pfropfpolymerisate enthalten bevorzugt 40 bis 80, insbesondere 50 bis 70 Gew.-% Acrylatkautschuk.

Zur Herstellung von Pfropfcopolymerisaten B im Sinne der ersten Ausführungsform, d.h. unter Einschluß von copolymerisierbaren Phosphorverbindungen B23 hergestellten Pfropfcopolymerisate B ist im einzelnen das Folgende zu sagen:

Die Polymeren B werden hergestellt durch Polymerisation einer Monomermischung aus

40 bis 98, insbesondere 50 bis 80 Gew.-% Styrol, α-Methylstyrol, kernsubstituiertem Styrol (z.B. 4-Methylstyrol) und/oder Methylmethacrylat (B21),
1 bis 50, insbesondere 10 bis 40 Gew.-% (Meth)acrylnitril und/oder Maleinsäureanhydrid (B22), sowie 1 bis 50, insbesondere 10 bis 40 Gew.-% der organischen Phosphorverbindung (I) bzw. B23 in Gegenwart des kautschukelastischen Polymeren B1, d.h. der Pfropfgrundlage. Im übrigen gelten die oben angegebenen allgemeinen Einzelheiten zur Herstellung der Pfropfpolymerisate B.

Thermoplastische Copolymerisate

Die erfindungsgemäß verwendbaren Copolymerisate C sollen halogenfrei sein und bestehen im wesentlichen z. B. aus Styrol, α-Methylstyrol und evtl. Methylmethacrylat (C1) einerseits und Acrylnitril, Methacrylnitril oder Maleinsäureanhydrid (C2) andererseits. Sie enthalten ferner (bei der zweiten Ausführungsform der Erfindung) die radikalisch polymerisierbare Phosphorverbindung (I) bzw. (C3).

Bevorzugt sind die Comonomeren $C_1$ und $C_2$ sowie ggf. auch $C_3$ in einem Mengenverhältnis - bezogen auf C - von 50 bis 95 und insbesondere 60 bis 90 Gew.-% zu 4 bis 49 und insbesondere 10 bis 40 Gew.-% zu (ggf.) 1 bis 40 und insbesondere 5 bis 30 Gew.-% in den Copolymerisaten enthalten, d.h. sie werden bei der Herstellung in entsprechenden Mengenverhältnissen angewendet.

Diese thermoplastischen, nicht auf Kautschuk gepfropften Copolymerisate entstehen häufig bei der Polymerisation der Pfropfcopolymerisate B als Nebenprodukte, was von den dort angewendeten Mengenverhältnissen abhängt.

Zur Schaffung einer ausreichenden Menge an sog. Hartmatrix werden sie jedoch getrennt von der Pfropfcopolymerisation in einem eigenen verfahrensgang hergestellt.

Die Herstellung geschieht im allgemeinen üblicherweise im Emulsions-, Suspensions-, Lösungs- oder Masseverfahren. Sie weisen schließlich Viskositätszahlen von z.B. 40 bis 160, insbesondere 60 bis 100 ml/g auf; dies entspricht einem gewichtsgemittelten Molgewicht $\overline{M}_w$ von etwa 15 000 bis 200 000.

Phosphorverbindungen

Die erfindungsgemäß geeigneten halogenfreien Phosphorverbindungen D sind generell bekannt (siehe beispielsweise Ullmann, Enzyklopädie der technischen Chemie, Bd. 18, S. 301 ff, 1979, Houben-Weyl, Methoden der organischen Chemie, Bd. 12/1, S. 43, S. 136; Beilstein, Bd. 6, S.1 177).

Erfindungsgemäß geeignete Phosphorverbindungen sind beispielsweise Tri-(2,6-dimethylphenyl)-phosphat, Triphenylphosphat, Trikresylphosphat, Diphenyl-2-ethyl-kresylphosphat, Diphenyl-kresylphosphat, Tri-(isopropylphenyl)-phosphat.

Um eine erhöhte Vicattemperatur in den Mischungen einzustellen, können auch Mischungen der obengenannten Phosphate mit z.B. Triphenylphosphinoxid oder Tri(2,6-dimethylphenyl)phosphinoxid eingesetzt werden.

Weiterhin sind die in der DE-OS 38 24 356 genannten Phosphate zur Erhöhung der Vicattemperatur der Mischungen geeignet, wie z.B.

Phosphorsäure-bis-phenyl-(4-phenylphenyl)-ester
Phosphorsäure-phenyl-bis-(4-phenylphenyl)-ester
Phosphorsäure-tris-(4-phenylphenyl)ester
Phosphorsäure-bis-phenyl-(benzylphenyl)-ester
Phosphorsäure-phenyl-bis-(benzylphenyl)-ester
Phosphorsäure-tris-(benzylphenyl)-ester
Phosphorsäure-phenyl-bis-[(1-phenylethyl)-phenyl]-ester
Phosphorsäure-phenyl-bis-[(1-methyl-1-phenylethyl)-phenyl]-ester und
Phosphorsäure-phenyl-bis-[4-(1-phenylethyl)-2,6-dimethylphenyl]-ester Tetrafluorethylenpolymerisate

Komponente E

Die erfindungsgemäß geeigneten Tetrafluorethylenpolymerisate (Komponente E) sind Polymere mit Fluorgehalten von 65 bis 76 Gew.-%, vorzugsweise 70 bis 76 Gew.-%. Beispiele sind u.a. Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomerer. Derartige Polymerisate sind bekannt. Sie können nach bekannten Verfahren hergestellt werden, so beispielsweise durch Polymerisation von Tetrafluorethylen in wäßrigem Medium mit einem freien Radikale bildenden Initiator, beispielsweise Natrium-, Kalium- oder Ammoniumperoxidisulfat bei Drücken von 7,71 kg/$cm^2$ und bei Temperaturen von 0 bis 200°C, vorzugsweise bei Temperaturen von 20 bis 100°C (nähere Einzelheiten siehe beispielsweise US-Patent 2 393 967).

Die erfindungsgemäßen geeigneten Polytetrafluorethylene haben mittlere Teilchengrößen von 0,05 bis 20 µm, vorzugsweise 0,08 bis 10 µm und eine Dichte von 1,2 bis 1,9 g/cm³. Durch Zusatz von Tetrafluorethylenpolymerisaten wird insbesondere das Abtropfen der Formmassen während des Brandvorgangs reduziert oder ganz verhindert.

Die wäßrige Dispersion des PTFE-Polymeren kann entweder auf das Granulat im Fluidmischer aufgezogen werden, oder in die Schmelze der Komponente C in einem Extruder mit Entgasung eingebracht werden. Weiterhin können auch Emulsionen der Komponente B mit Emulsionen der Komponente E vereinigt und mittels Salzlösung gefällt werden.

Komponente F

Die Formmasse kann weiterhin übliche Zusatzstoffe enthalten. Genannt seien Kohlenstoff-Fasern und Glasfasern u.a.

Die verwendeten Glasfasern können aus E-, A- oder C-Glas sein. Sie sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern mit einer Länge von 1 bis 10 mm, vorzugsweise 3 bis 6 mm, eingesetzt werden.

- Füll- oder Verstärkungsstoffe, wie Glaskugeln, Mineralfasern, Whisker, Aluminiumoxidfasern, Glimmer, Quarzmehl, Wollastonit etc.
- Metallflocken (z.B. Aluminiumflocken der Fa. Transmet Corp.), Metallpulver, Metallfasern, metallbeschichtete Füllstoffe (z.B. nickelbeschichtete Glasfasern) sowie andere Zuschlagsstoffe, die elektromagnetische Wellen abschirmen. Insbesondere kommen Al-Flocken (K 102 der Fa. Transmet) in Mengen von 30 bis 70 Gew.-Teilen, bezogen auf die flammfeste Formmasse aus 100 Gew.-Teile A bis E für EMI*-Zwecke (*Electro-Magnetic Interference) in Betracht; ferner Abmischen dieser Masse mit zusätzlich Kohlenstofffasern oder Leitfähigkeitsruß oder nickelbeschichteten C-Fasern.

Die erfindungsgemäße Formmasse kann ferner weitere Zusatzstoffe enthalten, die für Polycarbonate, SAN-Polymerisate und Pfropfmischpolymerisate auf Basis von ASA oder ABS oder deren Mischungen typisch und gebräuchlich sind. Als solche Zusatzstoffe seien beispielsweise genannt: Farbstoffe, Pigmente, Antistatika, Antioxidantien und insbesondere die Schmiermittel, die für die Weiterverarbeitung der Formmasse, z.B. bei der Herstellung von Formkörpern bzw. Formteilen erforderlich sind.

Weitere Zusatzstoffe können in Mengen von 0,05 bis 80 Gew.-%, bezogen auf die Gesamtmenge der Mischung zugesetzt werden.

Hierbei werden Verarbeitungshilfsmittel und Stabilisatoren üblicherweise in Mengen ≤ 2 % verwendet.

Verstärkungsmittel wie Glasfasern, C-Fasern etc. werden üblicherweise in Mengen ≥ 5 % bis 80°C, bezogen auf die Summe von A bis E, zugesetzt.

Herstellung der Formmasse

Wie erfindungsgemäß wird die Formmasse aus ihren fertigen Bestandteilen durch Mischen erhalten. Es kann vorteilhaft sein, einzelne Komponenten vorzumischen.

Das Mischen kann mit allen bekannten Methoden geschehen. Vorzugsweise werden die Bestandteile bei Temperaturen von 200 bis 320°C durch gemeinsames Extrudieren, Kneten oder Verwalzen gemischt, wobei die Bestandteile entweder in Form ihrer Emulsionen oder Lösungen ganz oder teilweise vorgemischt und dann zunächst von den Trägern (Lösungsmittel, Wasser) befreit werden oder man gewinnt alle Bestandteile zunächst einzeln und mischt sie dann, d.h. nachdem sie zuvor aus der bei der Polymerisation erhaltenen Lösung oder aus der wäßrigen Dispersion isoliert worden sind. Die in wäßriger Dispersion erhaltenen Produkte der Pfropfmischpolymerisation (Komponente B) können zusammen mit der Komponente E koaguliert, gefällt und teilweise entwässert oder direkt als Dispersionen mit der Komponente C und dann mit dem Polycarbonat A und der Komponente D, vermischt werden, wobei dann während des Vermischens die vollständige Trocknung der Komponenten B und E erfolgt. Außerdem kann die Emulsion der Komponente E unter Entgasung in einem Extruder in eine Schmelze der Komponente C eingezogen werden und im selben Extruder nach der Entgasung die weiteren Komponenten A, B und D zudosiert werden.

Geeignete Mischaggregate für die Durchführung des erfindungsgemäßen Verfahrens sind beispielsweise übliche Taumelmischer oder Rührwerksmischer.

Geeignete Aggregate für die Schmelzcompoundierung sind beispielsweise diskontinuierlich arbeitende, beheizte Innenkneter mit oder ohne Stempel, kontinuierlich arbeitende Innenkneter, Schneckenkneter mit axial oszillierenden Schnecken, Zweiwellenextruder sowie Mischwalzwerke mit beheizten Walzen.

Geeignete Aggregate für die Schmelzextrusion sind beispielsweise Ein- und Zweiwellenextruder.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern: besonders bevorzugt werden aus den nach dem erfindungsgemäßen Verfahren hergestellte Formmassen Formteile durch Spritzgießen für den Automobilbau, den Bausektor, für Büromaschinen, elektrische Geräte und Haushaltsgeräte hergestellt.

Die zur Charakterisierung beispielhafter Verfahrensprodukte verwendeten Parameter wurden wie folgt bestimmt:

1. die mittlere Teilchengröße und die Teilchengrößenverteilung wurde aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar.

2. Der Schmelzindex MFI in g/10 min wurde nach DIN 53735 bei einer Temperatur von 260°C und einer Belastung von 5 kg bestimmt.

3. Die Wärmeformbeständigkeit Vicat B/50 wurde an Stäben der Abmessung 50 x 6 x 4 mm nach DIN 53 460 bestimmt.

4.

a) Die relative Lösungsviskosität $\eta_{rel.}$, des eingesetzten Polycarbonats wurde in einer 0,5%igen Lösung in Methylenchlorid bei 23°C gemessen;

b) die Viskositätszahl, VZ, der Copolymerisate C in 0,5%iger Lösung in Dimethylformamid bei 23°C.

Für die Herstellung erfindungsgemäßer Formmassen und Massen für Vergleichsversuche wurden die nachfolgend beschriebenen Produkte verwendet.

Polycarbonat A

Als Polycarbonat A wurde ein handelsübliches Polycarbonat auf Basis von Bisphenol A mit einer relativen Lösungsviskosität von 1,30 ml/g eingesetzt.

Pfropfcopolymerisat B

Zur Herstellung von Komponente B (erste Ausführungsform; mit Phosphat gepfropft) wurde wie folgt verfahren:

1,25 kg einer 40 gew.-%igen wäßrigen Dispersion von Polybutylacrylat (mittlere Teilchengröße $d_{50}$ = 76 nm), 16 kg Butylacrylat, und 0,4 kg Tricyclodecenylacrylat werden in 150 Litern Wasser unter Zusatz von einem kg des Natriumsalzes einer $C_{12}$-$C_{18}$-Paraffinsulfonsäure, 0,3 kg Kaliumpersulfat, 0,3 kg Natriumhydrogencarbonat und 0,15 kg Natriumpyrophosphat unter Rühren auf 60°C erwärmt. 10 Minuten nach dem Anspringen der Polymerisationsreaktion wurden innerhalb von 3 Stunden eine Mischung aus 82 kg Butylacrylat und 1,6 kg Tricyclodecenylacrylat zugegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%. Die mittlere Teilchengröße (Gewichtsmittel) wurde zu 430 nm ermittelt. Die Teilchengrößenverteilung war eng (Quotient Q = 0,1).

150 kg des erhaltenen Polybutylacrylat-Latex wurden mit 32 kg einer Mischung aus Styrol und Acrylnitril (Gewichtsverhältnis 75:25) und 8 kg des polymerisierbaren Phosphats MR 260*) und 60 Litern Wasser gemischt und unter Rühren nach Zusatz von weiteren 0,03 kg Kaliumpersulfat und 0,05 kg Lauroylproxid 4 Stunden auf 65°C erhitzt. Nach Beendigung der Pfropfmischpolymerisation wurde mittels Calciumchloridlösung bei 95°C gefällt, mit Wasser gewaschen und im warmen Luftstrom getrocknet. Der Pfropfgrad des Pfropfmischpolymerisats war 35 %.

*) Als polymerisierbares Phosphat gemäß Formel (I) wurde MR 260 der Fa. Daihachi Inc. verwendet mit der Struktur

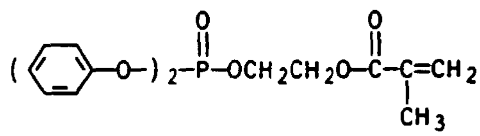

Zur Herstellung von Komponente B (zweite Ausführungsform; ohne Phosphat gepfropft) wurde wie bei der ersten Ausführungsform verfahren, mit dem Unterschied, daß anstatt 32 kg Styrol + Acrylnitril (Gewichtsverhältnis 75:25) und 8 kg MR 260 jetzt 40 kg einer Mischung aus Styrol und Acrylnitril (Gewichtsverhältnis 75:25) eingesetzt werden.

Copolymerisat C

Zur Herstellung der Komponente C nach der ersten Ausführungsform (ohne polymerisierbares Phosphat) wurde wie folgt verfahren:

Durch kontinuierliche Lösungspolymerisation nach einem Verfahren wie es beispielsweise im Kunststoff-Handbuch, Vieweg-Daumiller, Band V (Polystyrol), Carl-Hanser-Verlag, München 1969, Seite 124, Zeilen 12ff, beschrieben ist, wurde ein Styrol/Acrylnitril-Harz mit einem S/AN-Verhältnis von 81:19 und einer VZ von 100 ml/g hergestellt.

Zur Herstellung der Komponente C nach der zweiten Ausführungsform (mit polymerisierbarem Phosphat) wurde wie bei der Herstellung von Komponente C nach der ersten Ausführungsform verfahren, mit dem Unterschied, daß eine Mischung aus Styrol/Acrylnitril/MR 260 = 65/15/20 Gewichtsteilen eingesetzt wurde, wobei MR 260 ein polymerisierbares Phosphat der Fa. Daihachi Inc. ist, mit der Struktur

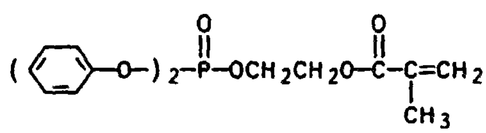

Komponente D

Triphenylphosphat

Komponente E

PTFE-Dispersion mit einem Feststoffgehalt von 60 Gew.-%, Dichte des gesinterten Feststoffs von 2,3 g/cm$^3$ und einer Teilchengröße von 0,23 µm (DuPont, Typ 30 N)

Beispiele 1, 2 und Vergleichsversuch

Komponente E wird in der in der Tabelle angegebenen Menge mit 100 Gew.-Teilen der Mischung der Komponenten A bis D in der Kälte im Taumelmischer vorgemischt und diese Mischung bei 50°C 1,6 kPa (12 Torr) 12 Stunden getrocknet.

Die in der Tabelle aufgeführten vorgemischten Bestandteile werden bei 260°C auf einem Doppelschneckenextruder (ZSK 30 der Fa. Werner & Pfleiderer) extrudiert. Aus dem getrockneten Granulat der Proben werden Formkörper für die Eigenschaftsprüfungen durch Spritzgießen bei 250°C hergestellt. Die Eigenschaften der Mischungen sind ebenfalls in der nachfolgenden Tabelle aufgelistet (Angaben zu den Bestandteilen sind Masseteile (Summe jeweils rd. 100)).

Tabelle:

| Beispiel | 1 | 2 | V*) |
|---|---|---|---|
| A | 65 | 65 | 65 |

*) Vergleichsversuch

Tabelle: (fortgesetzt)

| Beispiel | 1 | 2 | V*) |
|---|---|---|---|
| B**) | 8 | 8 | 8 |
| C***) | 16 | 16 | 16 |
| D | 11 | 11 | 11 |
| E | 0,35 | 0,35 | 0,35 |
| MVI | 162,5 | 116,0 | 61,2 |

*) Vergleichsversuch

**) Beispiel 1 mit, Beispiel 2 und Vergleichsversuch ohne Phosphat MR 260

***) Beispiel 2 mit, Beispiel 1 und Vergleichsversuch ohne Phosphat MR 260

## Patentansprüche

**1.** Formmasse aus, bezogen auf die Summe der Bestandteile A bis E

A: 40 - 90 Gew.-% eines Polycarbonats A;

B: 5 - 40 Gew.-% eines Pfropfpolymerisats B aus, bezogen auf B

B1: 40 - 80 Gew.-% einer elastomeren Pfropfgundlage B1 und
B2: 20 - 60 Gew.-% einer Pfropfhülle B2 aus

B21: 40 - 98 Gew.-% Styrol, dessen kernalkylierten oder α-alkylsubstituierten Analogen und/oder einem $C_1$-$C_8$-Alkyl(meth)acrylat oder deren Mischungen (B21)

B22: 1 - 50 Gew.-% (Meth)acrylnitril, $C_1$-$C_8$-Alkyl(meth)acrylat, Maleinsäureanhydrid oder deren Mischungen (B22) und

B23: 1 - 50 Gew.-% einer radikalisch polymerisierbaren organischen Phosphorverbindung B23 der allgemeinen Formel (I)

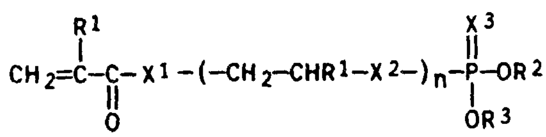

(I) ,

wobei bedeuten

$R^1$: Wasserstoff oder Methyl

$R^2$, $R^3$: unabhängig voneinander halogenfreies $C_1$-$C_8$-Alkyl oder halogenfreies ggf. halogenfrei substituiertes $C_6$-$C_{20}$-Aryl

$X^1$, $X^2$, $X^3$: O, S, $NR^4$ (wobei $R^4$ ein halogenfreies $C_1$-$C_8$-Alkyl oder H bedeutet)

n: 0 bis 10

mit der Maßgabe, daß n mindestens den Wert 1 hat, wenn $X^1$ und $X^2$ die gleiche Bedeutung haben oder gleichzeitig O und S bedeuten;

C: 5 - 40 Gew.-% eines thermoplastischen Copolymerisats C aus, bezogen auf C

C1: 50 - 95 Gew.-% Styrol, dessen kernsubstituierten oder α-alkylsubstituierten Analogen und/oder einem $C_1$-$C_8$-((meth)acrylat oder deren Mischungen ($C_1$)

C2: 50 - 5 Gew.-% (Meth)acrylnitril, Maleinsäureanhydrid oder deren Mischungen (C2)

D: bis zu 20 Gew.-% mindestens einer halogenfreien niedermolekularen Phosphorverbindung D sowie

E: bis zu 5 Gew.-% eines Tetrafluorethylen-Polymerisats (PTFE) mit einer mittleren Teilchengröße von 50 bis 20 000 nm.

**2.** Formmasse aus, bezogen auf die Summe der Bestandteile A bis E

A: 40 - 90 Gew.-% eines Polycarbonats A;

B: 5 - 40 Gew.-% mindestens eines Pfropfpolymerisats B aus, bezogen auf B

B1: 40 - 80 Gew.-% einer elastomeren Pfropfgrundlage B1 und

B2: 20 - 60 Gew.-% einer Pfropfhülle B2 aus

B21: 50 - 90 Gew.-% Styrol, dessen Analogen und/oder einem $C_1$-$C_8$-Alkyl(meth)acrylat oder deren Mischungen (B21)

B22: 50 - 5 Gew.-% (Meth)acrylnitril, einem $C_1$-$C_8$-Alkyl (meth)acrylat oder Maleinsäureanhydrid oder deren Mischungen B22)

C: 5 - 40 Gew.-% eines thermoplastischen Copolymerisats C aus, bezogen auf C,

C1: 50 - 95 Gew.-% Styrol, einem seiner Analogen, einem $C_1$-$C_8$-(meth)acrylat oder deren Mischungen (C1)

C2: 4 - 49 Gew.-% (Meth)acrylnitril, Methylmethacrylat, Maleinsäureanhydrid oder deren Mischungen (C2) und

C3: 1 - 40 Gew.-% einer radikalisch polymerisierbaren organischen Phosphorverbindung C3 der allg. Formel (I)

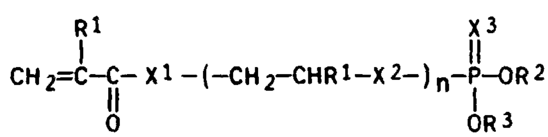

(I) ,

D: bis 20 Gew.-% mindestens einer halogenfreien niedermolekularen Phosphorverbindung C

E: einer wirksamen Menge von bis zu 5 Gew.-% eines Tetrafluorethylen-Polymerisats (PTFE,E) mit einer mittleren Teilchengröße von 50 bis 20 000 nm.

## Claims

**1.** A molding material comprising, based on the sum of constituents A to E,

A: 40 - 90% by weight of a polycarbonate A;
B: 5 - 40% by weight of a graft polymer B comprising, based on B,

B1: 40 - 80% by weight of an elastomeric graft base B1 and
B2: 20 - 60% by weight of a graft shell B2 comprising

B21: 40 - 98% by weight of styrene, a ringalkylated or α-alkyl-substituted analog thereof and/or a $C_1$-$C_8$-alkyl (meth)acrylate or a mixture thereof (B21),
B22: 1 - 50% by weight of (meth)acrylonitrile, $C_1$-$C_8$-alkyl (meth)acrylate, maleic anhydride or a mixture thereof (B22), and
B23: 1 - 50% by weight of an organophosphorus compound B23, which can be polymerized by means of free radicals, of the formula (I)

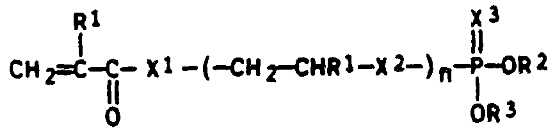 (I) ,

where

| | |
|---|---|
| $R^1$ | is hydrogen or methyl, |
| $R^2$ and $R^3$, | independently of one another, are halogen-free $C_1$-$C_8$-alkyl or halogen-free $C_6$-$C_{20}$-aryl, possibly containing halogen-free substituents, |
| $X^1$, $X^2$ and $X^3$ | are O, S or $NR^4$ (where $R^4$ is halogen-free $C_1$-$C_8$-alkyl or H), and |
| n | is 0 to 10, |

with the proviso that n has a value of at least 1 if $X^1$ and $X^2$ are identical or are simultaneously O and S;

C: 5 - 40% by weight of a thermoplastic copolymer C comprising, based on C,

C1: 50 - 95% by weight of styrene, a ring-substituted or α-alkyl-substituted analog thereof, and/or a $C_1$-$C_8$-alkyl (meth)acrylate, or a mixture thereof ($C_1$),
C2: 50 - 5% by weight of (meth)acrylonitrile, maleic anhydride or a mixture thereof (C2),

D: up to 20% by weight of at least one halogen-free, low-molecular-weight phosphorus compound D, and
E: up to 5% by weight of a tetrafluoroethylene polymer (PTFE) having a mean particle size of from 50 to 20,000 nm.

**2.** A molding material comprising, based on the sum of constituents A to E,

A: 40 - 90% by weight of a polycarbonate A;
B: 5 - 40% by weight of at least one graft polymer B comprising, based on B,

B1: 40 - 80% by weight of an elastomeric graft base B1, and
B2: 20 - 60% by weight of a graft shell B2 comprising

B21: 50 - 90% by weight of styrene, an analog thereof, and/or a $C_1$-$C_8$-alkyl (meth)acrylate, or a mixture thereof (B21) and
B22: 50 - 5% by weight of (meth)acrylonitrile, a $C_1$-$C_8$-alkyl (meth)acrylate or maleic anhydride, or a mixture thereof (B22),

C: 5 - 40% by weight of a thermoplastic copolymer C comprising, based on C,

C1: 50 - 95% by weight of styrene, an analog thereof, a $C_1$-$C_8$-alkyl (meth) acrylate or a mixture thereof (C1),
C2: 4 - 49% by weight of (meth)acrylonitrile, methyl methacrylate, maleic anhydride or a mixture thereof (C2), and
C3: 1 - 40% by weight of an organophosphorus compound C3, which can be polymerized by means of free radicals, of the formula (I)

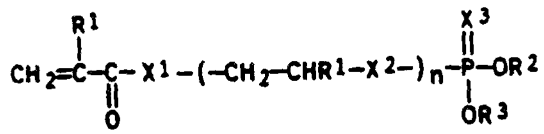

(I) ,

D: up to 20% by weight of at least one halogen-free, low-molecular-weight phosphorus compound C, and
E: an effective amount of up to 5% by weight of a tetrafluoroethylene polymer (PTFE, E) having a mean particle size of from 50 to 20,000 nm.

**Revendications**

1. Masse à mouler constituée de, par rapport à la somme des constituants A à E

A : 40 - 90 % en poids d'un polycarbonate A;
B : 5 - 40 % en poids d'un polymère greffé B constitué de, par rapport à B

B1 : 40 - 80 % en poids d'une base de greffage élastomère B1 et
B2: 20 - 60 % en poids d'une enveloppe de greffage B2 constituée de

B21: 40 - 98 % en poids de styrène, de ses analogues alkylés sur le noyau ou substitués par un groupe alkyle en position $\alpha$ et/ou d'un (méth)acrylate d'alkyle en $C_1$-$C_8$ ou de leurs mélanges (B21)
B22: 1 -50 % en poids de (méth)acrylonitrile, de (méth)acrylate d'alkyle en $C_1$-$C_8$, d'anhydride maléique ou de leurs mélanges (B22) et
B23: 1 - 50 % en poids d'un composé de phosphore organique B23 polymérisable de manière radicalaire répondant à la formule générale (I)

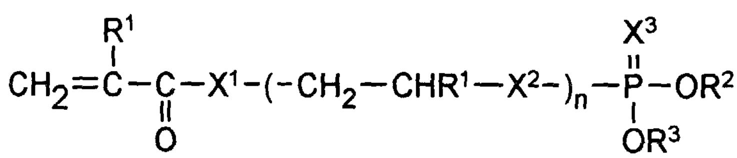

(I),

avec les significations

$R^1$ : atome d'hydrogène ou groupe méthyle
$R^2$, $R^3$ : indépendamment l'un de l'autre un groupe alkyle en $C_1$-$C_8$ exempt d'halogène ou un groupe aryle en $C_6$-$C_{20}$ exempt d'halogène, éventuellement substitué sans halogène
$X^1$, $X^2$, $X^3$ : O, S, $NR^4$ (où $R^4$ représente un groupe alkyle en $C_1$-$C_8$ exempt d'halogène ou H)
n : 0 à 10

sous réserve que n présente au moins la valeur de 1, lorsque $X^1$ et $X^2$ présentent la même signification ou lorsqu'ils représentent simultanément O et S;

C: 5 - 40 % en poids d'un copolymère thermoplastique C constitué de, par rapport à C

C1: 50 - 95 % en poids de styrène, de ses analogues alkylés sur le noyau ou substitués par un groupe alkyle en position $\alpha$ et/ou d'un (méth)acrylate d'alkyle en $C_1$-$C_8$ ou de leurs mélanges ($C_1$)
C2: 50 - 5 % en poids de (méth)acrylonitrile, d'anhydride maléique ou de leurs mélanges (C2)

D : jusqu'à 20 % en poids d'au moins un composé de phosphore inférieur D, exempt d'halogène, de même que
E: jusqu'à 5 % en poids d'un polymère de tétrafluoroéthylène (PTFE) avec une granulométrie moyenne de 50 à 20.000 nm.

**2.** Masse à mouler constituée de, par rapport à la somme des constituants A à E

A: 40 - 90 % en poids d'un polycarbonate A;
B: 5 - 40 % en poids d'au moins un polymère greffé B constitué de, par rapport à B

B1 : 40 - 80 % en poids d'une base de greffage élastomère B1 et
B2: 20 - 60 % en poids d'une enveloppe de greffage B2 constituée de

B21 : 50 - 90 % en poids de styrène, de ses analogues et/ou d'un (méth)acrylate d'alkyle en $C_1$-$C_8$ ou de leurs mélanges (B21)
B22 : 50 - 5 % en poids de (méth)acrylonitrile, d'un (méth)acrylate d'alkyle en $C_1$-$C_8$ ou d'anhydride maléique ou de leurs mélanges (B22)

C: 5 - 40 % en poids d'un copolymère thermoplastique C constitué de, par rapport à C

C1 : 50 - 95 % en poids de styrène, d'un de ses analogues, d'un (méth)acrylate d'alkyle en $C_1$-$C_8$ ou de leurs mélanges (C1)
C2 : 4 - 49 % en poids de (méth)acrylonitrile, de (méth)acrylate de méthyle, d'anhydride maléique ou de leurs mélanges (C2) et
C3: 1 - 40 % en poids d'un composé de phosphore organique C3 polymérisable de manière radicalaire, répondant à la formule générale (I)

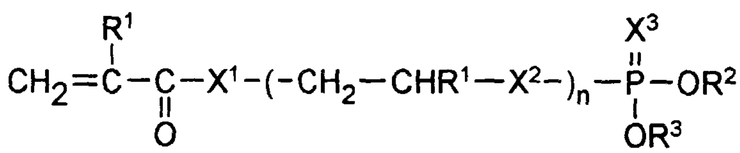

(I)

D : jusqu'à 20 % en poids d'au moins un composé de phosphore inférieur C, exempt d'halogène
E: une quantité efficace de jusqu'à 5% en poids d'un polymère de tétrafluoroéthylène (PTFE, E) avec une granulométrie moyenne de 50 à 20.000 nm.